# EUROPÄISCHE PATENTSCHRIFT

(11) **EP 3 542 996 B1**
(45) Veröffentlichungstag und Bekanntmachung des Hinweises auf die Patenterteilung: **09.03.2022**
(21) Anmeldenummer: 19163672.9
(22) Anmeldetag: 19.03.2019
(51) Int. Cl.: B29C 65/02, B29C 65/48, E06B 3/96, B29C 65/00, B29C 37/04, B29C 65/14, B29C 65/20, B29L 31/00

(54) **VERFAHREN FÜR DIE BEARBEITUNG EINES RAHMENS ODER TEILRAHMENS**
METHOD FOR PROCESSING A FRAME OR SUB-FRAME
PROCÉDÉ D'USINAGE D'UN CADRE OU D'UN CADRE PARTIEL

(30) Priorität: 19.03.2018 DE 102018106400
(43) Veröffentlichungstag der Anmeldung: 25.09.2019
(60) Teilanmeldung: 22155091.6
(73) Patentinhaber: Urban GmbH & Co. Maschinenbau KG, 87700 Memmingen (DE)
(72) Erfinder: Henkel, Markus, 87752 Holzgünz-Schwaighausen (DE)
(74) Vertreter: Patentanwälte Olbricht, Buchhold, Keulertz Partnerschaft mbB

(56) Entgegenhaltungen:
- EP-A1- 3 117 981
- EP-A1- 3 339 006
- WO-A1-93/10935
- WO-A1-2019/038144
- DE-A1- 1 454 937
- DE-A1- 2 017 461
- DE-A1- 2 348 607
- DE-A1-102015 013 439
- DE-A1-102017 127 483
- DE-U1-202015 000 909
- GB-A- 2 350 318

## Beschreibung

Die Erfindung betrifft ein Verfahren für das Verbinden zweier Kunststoffprofile, insbesondere zur Herstellung eines Flügel- oder Stockrahmens. Des Weiteren ist eine Vorrichtung für die Bearbeitung zumindest eines Teils der Stoßkante offenbart, die sich beim Verbinden zweier Kunststoffprofile, insbesondere Flügel- oder Stockrahmenprofile ergibt.

Als Flügelrahmen wird der bewegliche Rahmen bei einem Fenster oder einer Türe angesehen. Der Stockrahmen ist mit dem Gebäude fest verbunden und nimmt den Flügelrahmen auf. Flügel- oder Stockrahmen werden als Tür- oder Fensterrahmen bzw. Rahmen im Zusammenhang mit dieser Beschreibung verstanden.

Im Stand der Technik ist es bekannt für die Herstellung eines Tür- oder Fensterrahmens bzw. deren Teilrahmen die einzelnen, auf Maß geschnittenen Kunststoffprofilstücke (nachfolgend auch als Kunststoffprofile beschrieben) miteinander zu verschweißen. Üblicherweise wird dem Maß ein möglichst geringes Übermaß aufgeschlagen, das bei dem Verschweißen aufgezehrt wird und für einen festen Verbund der beiden Kunststoffprofile sorgt. Beim Verschweißen werden die zu verbindenden Flächen der Kunststoffprofile, (üblicherweise die auf Gehrung geschnittenen Endbereiche der Kunststoffprofile) zunächst erwärmt (bis diese plastisch werden) und dann in einen Fügeschritt, derart aufeinander zu bewegt, dass die plastifizierten Profilbereiche der zu verbindenden Flächen einander durchdringen und so eine verschweißte Verbindung ergeben.

Nun kann es sich ergeben, dass sich an der Stoßkante, wo die beiden zu verbindenden Kunststoffprofile aneinander stoßen, sich unschöne Erhebungen oder Schweißwulste bilden. Gründe für diese unschöne Ausgestaltung sind zum Beispiel Maßtoleranzen der zu verarbeitenden Kunststoffprofile oder auch ein ungeschickt geführter Verbindungsprozess. Zum Beispiel wurde das Kunststoffprofil mit einem zu großen Übermaß abgeschnitten und dieser Überstand muss dann beim Verschweißen kompensiert (abgeschmolzen) werden, was dazu führt, dass sich in dem Fügeschritt das zu verdrängende, plastifizierte Kunststoffmaterial in einem sichtbaren Schweißwulst außen, außerhalb der verschweißten Profilstücke sammelt.

Im Stand der Technik war es bislang bekannt, diesen sich bildenden Schweißwulst zu entfernen, zum Beispiel abzustechen. Allerdings führt dies zu einer am Stoßbereich (zum Beispiel der Gehrung) sichtbaren Hohlkehle, was nicht gewünscht ist.

Aus DE 1454937 A1 ist ein Verfahren für das Verbinden zweier Flächengebilde bekannt. Es umfasst das Zusammenführen der beiden Flächengebilde mittels Erwärmen der Flächengebilde durch ein profiliertes Schweißschwert derart, dass sich spätestens mit dem Kontakt der zu verbindenden Flächen der Flächengebilde eine mechanisch stabile Verbindung und zwischen den Flächengebilden eine Stoßkante ergibt, Bewegen einer Glätteinrichtung, die als Druckkörper dient, entlang der Längserstreckung der Stoßkante, wobei die Glätteinrichtung eine Kraft, die spitzwinklig zur Längserstreckung der Stoßkante gerichtet ist, auf die Stoßkante ausübt.

DE 2348607 A1 offenbart mehrere Verfahren für das Verbinden zweier Kunststoffwände, bzw. eines Akkumulatorbehälters und seines Deckels. Hierzu ist vorgesehen: Zusammenführen des Akkumulatorbehälters und seines Deckels, derart, dass sich spätestens mit dem Kontakt der zu verbindenden Flächen der beiden Elemente eine mechanisch stabile Verbindung und zwischen den beiden Elementen eine Stoßkante ergibt, Bewegen eines als Druckkörper fungierenden Teils quer zu der Längserstreckung der Stoßkante, wobei der das Teil 49 eine Kraft, die spitzbis rechtwinklig zur Längserstreckung der Stoßkante gerichtet ist, auf die Stoßkante ausübt.

Die Erfindung hat es sich daher zur Aufgabe gemacht, diesen Stand der Technik zu verbessern.

Zur Lösung dieser Aufgabe geht die Erfindung von einem Verfahren wie eingangs beschrieben aus und schlägt die Abfolge folgender Schritte vor:
▪ Zusammenführen der beiden Kunststoffprofile, derart dass sich spätestens mit dem Kontakt der zu verbindenden Flächen der Kunststoffprofile eine mechanisch stabile Verbindung und zwischen den Kunststoffprofilen eine Stoßkante ergibt,
▪ Bewegen eines Druckkörpers entlang der Längserstreckung der Stoßkante, wobei der Druckkörper eine Kraft, die spitz- bis rechtwinklig zur Längserstreckung der Stoßkante gerichtet ist, auf die Stoßkante ausübt. Der Druckkörper ist als drehbar gelagerter Rolldruckkörper ausgebildet, wodurch es sich bei der Bewegung um ein Abrollen handelt, und
▪ Eindrücken einer an der Stoßkante über die Außenkontur der verbundenen Kunststoffprofile hervorstehenden Schweißwulst durch den Druckkörper in den Stoßbereich der beiden Kunststoffprofile.

Die erfindungsgemäße Lösung ist bei der Art und Weise wie die Kunststoffprofile miteinander verbunden werden sehr flexibel einsetzbar, Beispiele werden weiter unten noch gegeben. Der Pfiff der Erfindung liegt darin, dass gefunden wurde, dass die sich an der Stoßkante ergebende Stufe, Erhebung oder auch der beim Verschweißen entstehende Schweißwulst (nachfolgend umfassend auch als Profilüberstand bezeichnet) durch einen Druckkörper in den Stoßbereich, also dem Bereich wo die beiden Kunststoffprofile aneinander stoßen, hineingedrückt wird.

Als Stoßkante im Sinne dieser Beschreibung (wobei die nachfolgende Definition nicht abschließend ist) wird der Bereich an einem Rahmen bzw. Teilrahmen verstanden, wo zwei Kunststoffprofile aneinanderstoßen, d.h., die Oberfläche des Rahmens geht von dem ersten auf den zweiten Profilstab über. Üblicherweise ist die Stoßkante linienartig zu verstehen, und gibt insbesondere eine Raumorientierung vor. Hierauf ist der Begriff Stoßkante aber nicht reduziert zu verstehen, da sich an der Stoßkante auch ein Schweißwulst ergeben kann, der eine gewisse Breite aufweist, auch solche eine Ausgestaltung ist von dem Begriff Stoßkante umfasst. Dabei sind die beiden Kunststoffprofile auch an ihrer Oberfläche miteinander verbunden, sie können aber auch hier einen unverbundenen Bereich oder auch einen kleinen Spalt bilden. Auch diese Varianten sind unter dem Begriff Stoßkante zu subsumieren. Zu beachten ist ferner, dass sich die Stoßkante nicht nur an den Sichtoberflächen (der Profilober- bzw. Profilunterseite) ergibt, sondern an allen Profilbereichen, die miteinander verbunden werden, also auch an den mit Absätzen usw. ausgestatteten Innen- bzw. Außenecke.

Die Stoßkante ist dabei dadurch definiert, wo die beiden Kunststoffprofile aneinander stoßen, dies ist in diesem Fall auch gleichzeitig die Gehrung, die einander zugewandten Querschnittsflächen der Kunststoffprofile werden an den so definierten Gehrungsfläche miteinander verbunden. Dabei erstreckt sich die Stoßkante nicht nur an der Profiloberseite, sondern die Stoßkante bildet sich an der gesamten Gehrungsfläche an der Außenkontur der hier aneinanderstoßenden Kunststoffprofile, also an der Innenecke, der Profiloberseite, der Außenecke und der Profilunterseite, aus. Dabei ist es kein Widerspruch, dass die Stoßkante im Sinne dieser Definition abschnittsweise im Raum anders orientiert ist. Der Begriff "Stoßkante" beschreibt insofern die Gesamtheit des außen, an den Profilen liegenden Begrenzungsbereiches, wie auch einen Teil davon, zum Beispiel an der Profiloberseite, der Außenecke, der Profilunterseite oder der Innenecke, wie auch einen Abschnitt dieses Teiles, was dem Fachmann insofern klar ist.

Bevorzugt erfolgt die Durchführung des Verfahrens genau in der beschriebenen Reihenfolge (zuerst 1., dann 2.) also
1. Zusammenführen der beiden Kunststoffprofile, derart, dass sich spätestens mit dem Kontakt der zu verbindenden Flächen der Kunststoffprofile eine mechanisch stabile Verbindung und zwischen den Kunststoffprofilen eine Stoßkante ergibt,
2. Bewegen eines Druckkörpers entlang der Längserstreckung der Stoßkante, wobei der Druckkörper eine Kraft, die spitz- bis rechtwinklig zur Längserstreckung der Stoßkante gerichtet ist, auf die Stoßkante ausübt.

Überraschenderweise wurde gefunden, dass für das Eindrücken des Profilmaterials dieses nicht erwärmt werden muss. Der erfindungsgemäße Erfolg stellt sich auch bei einem nicht erwärmten Kunststoffprofil bzw. Stoßbereich ein.

Geschickter Weise ist vorgesehen, dass bevor, insbesondere kurz bevor der Druckkörper entlang der Stoßkante bewegt wird, eine Heizung zumindest den Bereich der Stoßkante erwärmt. Das für die Herstellung von Fensterrahmen eingesetzte Kunststoffmaterial (üblicherweise PVC) ist thermoplastisch, daher unterstützt eine Erwärmung der Stoßkante bzw. des Kunststoffmaterials im Bereich der Stoßkante das Eindrücken dieses Material in das Volumen des Kunststoffprofiles.

Des Weiteren ist in dem Vorschlag vorteilhafter Weise vorgesehen, dass das Verbinden durch ein Verschweißen der jeweiligen Flächen, zum Beispiel den Gehrungsflächen, erfolgt, wozu diese zumindest teilweise erwärmt und dann aufeinander zu bewegt werden. Beim Verschweißen wird zum Beispiel über einen Heizspiegel oder eine Infrarotheizung erhebliche thermische Energie in die zu verschweißen Kunststoffflächen eingeprägt bis diese plastisch werden. Danach werden die beiden erwärmten Flächen aufeinander zu bewegt (dabei selbstverständlich genau geführt), bis sich diese Flächen einander berühren und die Materialien der beiden Profile einander durchdringen. Wie eingangs beschrieben besteht bei diesem Verfahrensschritt die Möglichkeit, dass sich ein Schweißwulst an der Stoßkante bildet, der zu entfernen ist. Auch wenn heutzutage Verschweißprozesse bekannt sind, bei welchen die zu verschweißenden Gehrungsflächen mit geringstem Übermaß hochgenau vorbereitet werden (zum Beispiel durch einem spanabhebenden Bearbeitungsschritt vor dem Verschweißen), so bestehen doch Maßtoleranzen bei den Kunststoffprofilen, die an der Stoßkante gleichwohl zu einem nicht gewünschten Profilüberstand, Absatz oder Erhebung führt der zumindest optisch bzw. haptisch durch den erfindungsgemäß vorgeschlagenen Verfahrensschritt, unter Einsatz des Druckkörpers beseitigbar ist.

Des Weiteren ist günstiger Weise vorgesehen, dass die Bewegung des Druckkörpers gleich im Anschluss auf das Verschweißen erfolgt, wenn die Stoßkante noch vom Verschweißen erwärmt ist. Durch diesen Vorschlag wird die im Stoßbereich bzw. an der Stoßkante vorhandene Restwärme des Kunststoffmateriales ausgenutzt und so durch das Eindrücken eine plastische Verformung erreicht. Neben diesem energiesparenden Schritt hat dieser Schritt aber auch den Vorteil, dass Bearbeitungszeit gespart wird, da üblicherweise nach dem Verschweißen zunächst eine gewisse Zeit abgewartet werden muss, bis die Eckverbindung abgekühlt und ausreichend stabil ausgehärtet ist. Während dieser Wartezeit kann dieser Verfahrensschritt ausgeführt werden, er verlängert daher nicht die Produktionszeit, verbessert aber erheblich die optische Gestaltung der Verbindung ohne ihre mechanische Stabilität zu beeinträchtigen.

Bei einer nicht beanspruchten Ausgestaltung des Vorschlags ist vorgesehen, dass das Verbinden durch ein Verkleben der jeweiligen Flächen, zum Beispiel den Gehrungsflächen, erfolgt, wozu zumindest eine der zu verbindenden Flächen zumindest teilweise mit Klebstoff ausgestattet wird und die Flächen dann aufeinander zu bewegt werden. Natürlich erfolgt auch diese Bewegung möglichst exakt geführt, da hieraus letztendlich die Ausrichtung der Profilstäbe zueinander resultiert und so letztendlich auch die Gestaltung des Rahmens bestimmt wird.

Wird für das Verbinden ein Verkleben vorgesehen, so kommt man bei der Vorbereitung der Kunststoffprofile ohne Übermaß aus, da die Klebeschicht bereits mit geringer Dicke eine sehr hohe Klebekraft und somit Eckfestigkeit herstellt. Geschickter Weise wird dabei die zu verbindenden Flächen vor dem Verkleben hochgenau (bezüglich des exakten Maßes und auch bezüglich der Parallelität der zu verklebenden Flächen) spanabhebend bearbeitet.

Der Vorschlag sieht mehrere Varianten vor, wie die zu verbindende Fläche mit Klebstoff ausgestattet wird. Hierzu sind mehrere unterschiedliche Techniken bekannt. So kann die Fläche mit dem Klebstoff bespritzt, besprüht oder benetzt werden. Zum Beispiel wird der Klebstoff (vorzugsweise, aber nicht beschränkend, ein Zweikomponentenkleber, es funktionieren aber auch einfachere Klebstoffe) in einem Sprühkopf unter Druck vorgehalten, der dann den Klebstoff auf die Oberfläche abgibt. Daneben ist es aber auch möglich, den Klebstoff zum Beispiel mit einer Rolle oder mit einem anderen Auftragelement auf die Fläche aufzutragen.

Gemäß des Vorschlages reicht es bereits aus, wenn eine der zu verbindenden Flächen mit Klebstoff ausgestattet wird, dies schließt natürlich nicht aus, dass beide zu verbindenden Flächen mit Klebstoff vorbereitet werden, wobei zur Offenbarung auch der Vorschlag zählt, auf jede der beiden Flächen je eine Komponente eines Zweikomponentenklebers aufzutragen.

Die Erfindung umfasste aber noch weitere Verbindungstechniken:
So ist zum Beispiel vorgesehen, dass eine Verbindung auch über ein in die beiden Kunststoffprofile eingestecktes Verbindungs- oder Adapterstück erfolgen kann.

Des Weiteren ist es auch möglich, dass eine Verbindung über ein Heißkleben erfolgt.

Natürlich können auch die vorgenannten Varianten miteinander kombiniert werden, die Liste der Aufzählungen ist nicht abschließend.

In einer vorteilhaften Ausgestaltung ist vorgesehen, dass ein an der Stoßkante über die Außenkontur der verbundenen Kunststoffprofile hervorstehender Schweißwulst oder sich im Bereich der Stoßkante nach dem Verbinden ergebende Erhebung, Überstand oder Höhenunterschied durch den Druckkörper in den Stoßbereich der beiden Kunststoffprofile eingedrückt wird. Als Profilüberstand wird jede Art von Schweißwulst, Erhebung, Überstand, Absatz oder Höhenunterschied verstanden.

Es ist ein Vorzug des Vorschlages, dass die sich beim Verbinden der Profile eventuell ergebenden, an der Stoßkante befindlichen unschönen Profilüberstände, Versätze, Erhebungen oder Überstände aber auch Schweißwulste durch den Vorschlag, ohne spanabhebend tätig zu werden, beseitigen lassen.

Beachtenswert ist dabei insbesondere, dass das sehr gute Bearbeitungsergebnis hierbei ohne eine weitere, zusätzliche vorhergehende spanabhebende Bearbeitung an der Begrenzungskante des Profiles (also zum Beispiel an der Profiloberseite) erreicht wird. Der erfindungsgemäße Vorschlag kommt vollständig ohne die Anordnung einer Phase oder Nut an der Profilaußenseite aus. Da kein zusätzlicher Bearbeitungsschritt notwendig ist, ist der Vorschlag für den Anwender auch effektiv, da Bearbeitungszeit gespart und gleichzeitig ein sehr gutes Bearbeitungsergebnis erreicht wird.

Vereinfacht gesagt werden mit dem erfindungsgemäßen Vorschlag die Ungenauigkeiten an der Stoßkante in die Kunststoffprofile eingebügelt. Dabei ist es günstig, dass die Kunststoffprofile nicht aus Vollmaterial bestehen, sondern Hohlkammern aufweisen, die ein Raumreservoir für die Aufnahme des in das Kunststoffprofilinnere eingedrückte, überflüssige Material bildet.

Ein Vorzug der Erfindung liegt darin, dass das Eindrücken des Profilüberstandes zeitlich nicht festgelegt ist. So kann dieses Eindrücken gleich nach dem Verbinden der beiden Kunststoffprofile erfolgen, wenn diese beiden noch aufgrund des Verbindungsprozesses in einer gemeinsamen Aufspannung zueinander fixiert sind.

Es ist aber auch möglich, das Eindrücken in einer separaten Station, die von der Station des Verbindens funktional getrennt ist, durchzuführen. In einem solchen Fall wird zum Beispiel eine Bearbeitung nur durchgeführt, wenn bei einer Begutachtung der Stoßkante die Qualität derselben noch nicht ausreichend ist. Dabei erfolgt eine solche Überprüfung in einer Qualitätsstation. Diese kann diese Überprüfung zum Beispiel mechanische und/oder optische Kriterien zu Grunde legen. So folgt nach der Verbindungsstation eine Qualitätsstation und hernach die Station zur Bearbeitung der Stoßkante. Die beiden vorgenannten Ausführungsvarianten gehören zur Erfindung.

Des Weiteren wird eine Vorrichtung offenbart, die für die Bearbeitung zumindest eines Teils der Stoßkante vorgesehen ist, die sich beim Verbinden zweier Kunststoffprofile, insbesondere zur Herstellung eines Flügel- oder Stockrahmens ergibt.

Eine solche Vorrichtung weist einen Haltekörper auf, der mindestens einen Druckkörper trägt, wobei der Druckkörper dafür vorgesehen ist, durch den Haltekörper entlang der Längserstreckung der Stoßkante bewegt zu werden, wobei der Druckkörper eine Kraft, die spitz- bis rechtwinklig zur Längserstreckung der Stoßkante gerichtet ist, auf die Stoßkante ausübt und der Haltekörper zumindest entlang einer Raumachse durch einen Antrieb bewegbar und durch eine Führung geführt ist.

Erfindungsgemäß ist zudem vorgesehen, dass der Druckkörper als drehbar gelagerter Rolldruckkörper ausgebildet ist. Mit einem solchen als Rolldruckkörper ausgebildeten Druckkörper erfolgt das Eindrücken des Profilüberstandes als ein Einrollen. Der Vorzug dieser Variante liegt darin, dass die Kunststoffprofile idealerweise nur punktuell und auch nur in eine Richtung rechtwinklig zur Rahmenebene mit Kraft beaufschlagt werden. Ein solcher Vorschlag ist insbesondere bei folienbeschichteten Kunststoffprofilen günstig, bei welchen eine transversale Kraft (mit Bewegungsanteilen in Längsrichtung der Stoßkante) unter Umständen zu einer Beschädigung dieser Beschichtungsfolie führen könnte.

Der Einsatz dieser Vorrichtung kann in der gleichen Maschine erfolgen in welcher auch das Verbinden der Kunststoffprofile durchgeführt wird. Die vorgeschlagene Vorrichtung kann aber auch Gegenstand einer von dieser Maschine getrennten Bearbeitungsstation sein. In der Regel werden die Kunststoffprofile jeweils in einer Spannvorrichtung aufgespannt und sind daher stabil gelagert. Die Vorrichtung umfasst oder wirkt daher mit je einer entsprechenden Spannvorrichtung für das jeweilige Kunststoffprofil zusammen.

Vorzugsweise ist dabei für jedes Kunststoffprofil eine eigene Spannvorrichtung vorgesehen, die dafür ausgestattet ist, das jeweilige Kunststoffprofil aufzunehmen und für den Verbindungsvorgang zuverlässig zu halten. Dabei ist die Spannvorrichtung vorzugsweise in Längsrichtung des Kunststoffprofiles beweglich, wofür einerseits eine Führung für die Spannelemente der Spannvorrichtung und andererseits ein entsprechender Antrieb vorgesehen ist.

Oftmals befindet sich die Stoßkante im Bereich der Gehrung, also im Eckbereich der miteinander verbundenen Kunststoffprofile. Der Profilüberstand an der Stoßkante erstreckt sich dabei nicht nur auf der Profilober- oder Unterseite, die dem Benutzer unmittelbar sichtbar ist, sie streckt sich auch in den Innen- und Außenbereich, insbesondere der Innenecke bzw. Außenecke des Rahmens und ist auch dort aus funktionalen, aber auch aus ästhetischen Gründen nicht erwünscht.

Der Anwendungsfall der Erfindung ist aber auf die Eckverbindung, also die auf die Gehrung miteinander verbundenen Kunststoffprofile, nicht beschränkt. Auch eingesetzte Pfosten, sogenannte Kämpfer, können, nachdem diese mit dem Längsprofil verbunden sind, gemäß der Erfindung bearbeitet werden und so eine optisch wir auch haptisch ansprechende Stoßkantenausbildung erfahren.

Geschickter Weise besitzt die Vorrichtung einen Haltekörper. Der Haltekörper ist vorzugsweise entlang mindestens einer Raumachse, insbesondere vorzugsweise in der Ebene der Gehrungsfläche, die ja auch die Stoßkante beinhaltet, beweglich gelagert. Natürlich liegt die Raumachse, entlang der der Haltekörper beweglich ist, vorzugsweise in der Gehrungsfläche. An der Gehrungsfläche sind die beiden Kunststoffprofile miteinander verbunden, zum Beispiel verschweißt oder verklebt.

Der Haltekörper trägt zumindest einen Druckkörper. Aufgrund der Beweglichkeit des Haltekörpers ist der Druckkörper entlang der Stoßkante (durch eine Bewegungskraft) bewegbar. Nun ist die Anordnung so gewählt, dass bei einer Bewegung des Druckkörpers über die Stoßkante, also über die verbundenen Kunststoffprofile, eine entsprechende Kraft auf die Stoßkante ausgeübt wird (=Andrückkraft). Die beiden miteinander verbundenen Kunststoffprofile definieren eine Rahmenebene. Vorzugsweise ist die von dem Druckkörper erzeugte Kraft spitz- bis rechtwinklig zu dieser Rahmenebene orientiert bzw. besitzt zumindest einen nicht unerheblichen Kraftanteil rechtwinklig zur Rahmenebene, der ausreicht, diesem Profilüberstand in den Stoßbereich einzudrücken.

Letztlich schließt die Kraftkomponente, die von den Druckkörpern auf die Kunststoffprofile eingeprägt wird mit der Längserstreckung der Stoßkante in diesem Bereich einen spitzen bis rechtwinkligen Winkel ein, der aus der Überlagerung der Andrückkraft und der Bewegungskraft resultiert.

Erreicht wird dies durch eine entsprechende konstruktive Ausgestaltung. Der Haltekörper ist zumindest entlang einer Raumachse beweglich gelagert und geführt. Rechtwinklig zur dieser Raumachse, bevorzugt auch rechtwinklig zur Rahmenebene, ist der Haltekörper zum Beispiel gegen die Kraft eines Kraftreservoirs, wie einer Druckfeder oder einem Pneumatikzylinder vorgespannt. Durch diese Vorspannung wird erreicht, dass der Haltekörper bei Einwirken auf die Kunststoffprofile zurückfedern kann und so eine ausreichende Kraftreserve besitzt um auf dem Profilüberstand an der Stoßkante einzuwirken.

Vergleichbares kann auch dadurch erreicht werden, dass der Druckkörper federbelastet im Halterkörper gelagert ist.

Die hierbei auftretenden Bearbeitungskräfte werden über den (Teil-) Rahmen bzw. Kunststoffprofile/Profilstäbe auf die Spannvorrichtungen, die die Kunststoffprofile tragen und halten, übertragen.

Die offenbarungsgemäße Vorrichtung ist konstruktiv einfach wie in seiner Wirkung hocheffizient. Durch ihren Vorschlag wird ein einfaches Mittel zur Verfügung gestellt um ein im Stand der Technik erhebliches Problem zu lösen, nämlich die oftmals unvermeidbaren Profilüberstände optisch aber auch haptisch so zu beeinflussen, dass diese nicht oder kaum mehr wahrnehmbar sind und dabei keine unschönen Bearbeitungsspuren, wie zum Beispiel Hohlkehlen hinterlässt. Dabei ist die offenbarungsgemäße Vorrichtung sowohl an den großflächigen Sichtbereichen an den Stoßbereichen bzw. Gehrungsflächen, wie auch an den filigranen, engen Innen- oder Außenecken einsetzbar.

In einer weiteren bevorzugten Ausführungsform ist vorgesehen, dass der Druckkörper zumindest teilweise über den Haltekörper vorsteht, derart, dass bei einer Bewegung des Haltekörpers durch den Antrieb entlang einer Raumachse der Druckkörper auf die Stoßkante einwirkt.

Des Weiteren ist vorgesehen, dass der Druckkörper am Haltekörper bevorzugt an dessen Eckbereich angeordnet ist. Vorzugsweise ist vorgesehen, dass der Haltekörper mehrere Druckkörper trägt. Geschickter Weise ist die Anordnung dabei so gewählt, dass die einzelnen Druckkörper jeweils für die Bearbeitung spezieller Bereiche an der Stoßkante vorgesehen und optimiert sind. So ist zum Beispiel ein erster Druckkörper für die dem Benutzer zugewandte Profiloberseite vorgesehen. Ein zweiter bzw. dritter Druckkörper sind je für das Verarbeiten der Innen- bzw. Außenecke vorgesehen und sind dabei von dem ersten Druckkörper beabstandet und so an dem Haltekörper angeordnet, dass diese unabhängig voneinander einsetzbar sind. Auch die Ausgestaltung der Druckkörper ist für die jeweilige Bearbeitungsaufgabe angepasst, daher sind die Druckkörper nicht zwingend alle gleich ausgestaltet.

Des Weiteren ist vorgesehen, dass die Vorrichtung, der Haltekörper und/oder der Druckkörper eine Heizung für das Erwärmen zumindest des Bereichs der Stoßkante aufweist. Auch wenn gefunden wurde, dass auch der nicht erwärmte bzw. erkaltete Profilüberstand an der Stoßkante mit dem nach der Erfindung vorgeschlagenen Druckkörper erfolgreich bearbeitet werden kann, so wird durch den Einsatz einer Heizung, die für die Erwärmung zumindest des Bereichs der Stoßkante und somit auch des Profilüberstandes vorgesehen ist, eine Verbesserung des Arbeitsergebnisses erreicht. Es ist klar, dass sich die Stoßkante dabei nicht nur auf den jeweiligen Sichtoberflächen (Profilober- bzw. Unterseite), sondern auch im Innen- bzw. Außeneck des Rahmens erstreckt.

Dabei ist gefunden worden, dass es möglich ist, an verschiedenen Elementen eine Heizung einzusetzen. In einer ersten Variante ist dabei vorgesehen, dass an der Vorrichtung selber eine Heizung, zum Beispiel ein Heizspiegel oder Ähnliches, getrennt von dem Halte- bzw. Druckkörper vorgesehen ist und zum Beispiel durch eine eigene bewegliche Achse gegen die Stoßkante anstellbar ist. Vorteil dieser Variante ist, dass für diese Erwärmungsaufgabe zum Beispiel bereits an der Vorrichtung vorgesehene Heizelemente, namentlich zum Beispiel der Heizspiegel, der auch für das Verschweißen eingesetzt wird, nochmals genutzt werden kann.

Bei einer zweiten Variante ist die Heizung an dem Haltekörper angeordnet. Sie befindet sich zum Beispiel als separates Element auf dem Haltekörper und ist von dem Druckkörper getrennt ausgebildet. Vorteil dieser Variante ist, dass die Heizung dann zum Beispiel kurz vor dem Eindrückvorgang eingesetzt werden kann und ein separater Antrieb für die Heizung nicht notwendig ist, da hierfür der Antrieb des Haltekörpers mit genutzt werden kann.

In einer dritten Variante ist vorgesehen, dass der Druckkörper selber die Heizung aufnimmt bzw. besitzt. Vorteil dieser Variante ist, dass somit die Heizenergie punktuell exakt beim Eindrücken des Profilüberstandes zur Verfügung gestellt wird und aufgrund des begrenzten räumlichen Anwendungsbereiches die Gefahrenquelle eines heißen Maschinenelementes reduziert ist.

Es ist klar, dass die Offenbarung natürlich auch eine Kombination der verschiedenen Heizkonzepte umfasst.

Bei einer bevorzugten Ausgestaltung des Vorschlags ist vorgesehen, dass als Heizung ein Heizspiegel, eine Infrarotheizung oder eine Widerstandsheizung vorgesehen ist. Natürlich sind auch noch andere Heizkonzepte, die der Fachmann kennt, von der Findung umfasst.

Ein weiterer Vorzug des Vorschlages liegt darin, dass die Druckkörper, insbesondere die Rolldruckkörper an dem Haltekörper austauschbar angeordnet sind. So ist es zum Beispiel einfach möglich Rolldruckkörper auszutauschen und so auch deren Bearbeitungsprofil zu verändern. Wie insbesondere noch bei der Zeichnung beschrieben wird, besitzen die Rolldruckkörper im Schnitt gesehen sehr variable Ausgestaltungsvarianten, die es dann erlauben, zusätzlich an der Stoßkante nicht nur den Profilüberstand zu bearbeiten, sondern gegebenenfalls auch gleichzeitig eine vom Benutzer gewünschte Prägung oder optische Gestaltung an der Gehrung des Rahmens einzuarbeiten. In einer bevorzugten Ausgestaltung wird daher vorgeschlagen, dass der Rolldruckkörper, im Querschnitt gesehen, konvexe oder konkave Bereiche aufweist.

In einer nicht vom Anspruchswortlaut umfassten Ausgestaltung ist vorgesehen, dass der Druckkörper als Gleitdruckkörper, insbesondere mit einer reibarmen Gleitoberfläche ausgebildet ist. Im Einsatzfall wird der Gleitdruckkörper über die Stoßkante bzw. den Profilbereich gezogen. Bei dieser Variante ist der Druckkörper als an dem Haltekörper einsetzbares, insbesondere auf die spezielle Bearbeitungsaufgabe optimiertes, starres Werkzeug ausgebildet. Um mögliche Beeinträchtigungen des Kunststoffprofiles zu minimieren, ist die Gleitoberfläche, die auf die Kunststoffprofile, insbesondere den Profilüberstand, wirkt, mit einer Reibung reduzierenden Beschichtung ausgestattet, hierzu kann zum Beispiel Teflon dienen. Ein solcher Druckkörper ist insbesondere bei unbeschichteten Kunststoffprofilen und/oder auch für filigrane Eckbearbeitungen von Vorteil.

Unter Umständen kann es nämlich ausreichend sein, bei filigranen Anwendungen, wie zum Beispiel in der Innen- oder Außenecke den Gleitdruckkörper gegen die Stoßkante rechtwinklig anzustellen, diesen flächig aufzudrücken, so die Eindrückkraft auf die Stoßkante auszuüben und so den Profilüberstand einzudrücken. In diesem Fall ist eine Bewegung des Druckkörpers in Richtung der Stoßkante nicht zwingend erforderlich. Gegebenenfalls ist dabei die Größe des Druckkörpers dem jeweiligen Profil und Anwendungsfall angepasst.

Beachtenswert ist dabei insbesondere, dass das sehr gute Bearbeitungsergebnis hierbei ohne eine weitere, zusätzliche vorhergehende spanabhebende Bearbeitung an der Begrenzungskante des Profiles (also zum Beispiel an der Profiloberseite) erreicht wird. Der erfindungsgemäße Vorschlag kommt vollständig ohne die Anordnung einer Phase oder Nut an der Profilaußenseite aus. Da kein zusätzlicher Bearbeitungsschritt notwendig ist, ist der Vorschlag für den Anwender auch effektiv, da Bearbeitungszeit gespart und gleichzeitig ein sehr gutes Bearbeitungsergebnis erreicht wird.

In einer weiteren nicht vom Anspruchswortlaut umfassten Ausführungsform ist vorgesehen, dass der Gleitdruckkörper mindestens zwei winklig zueinander orientierte Gleitoberflächen aufweist.

Unter diese bevorzugte Ausführungsform lassen sich mehrere Gestaltungsvarianten subsumieren. Bei der ersten Variante wird mit einer ersten Gleitoberfläche ein erster Bereich der Stoßkante bearbeitet. Mit der zweiten Gleitoberfläche wird ein zweiter, von dem ersten Bereich beabstandeter Bereich der Stoßkante bearbeitet.

Bei der zweiten Variante dieses Vorschlages wirken beide, winkelig zueinander angestellten Gleitoberfläche auf beidseitig, an der Stoßkante (zum Beispiel links und rechts der Stoßkante) anschließenden Kunststoffprofilbereiche ein. Dieser Anwendungsfall ist zum Beispiel bei der Bearbeitung der Außen- oder Innenecke gegeben.

Bei einer dritten Variante werden die beiden vorbeschriebenen Gestaltungsvarianten miteinander kombiniert.

Die Mehrzahl von Gleitoberflächen dient dazu unterschiedliche Bereiche der Stoßkante am Rahmen bzw. Teilrahmen mit ein und denselben Gleitdruckkörper zu bearbeiten. Ein solcher Vorschlag ist platzsparend, da insbesondere bei den Eckbearbeitungen große Gleitdruckkörper hinderlich sein können und mit kleinen, komplex aufgebauten Gleitdruckkörper viele Bereiche der Stoßkante erreicht werden können. Üblicherweise ist der Haltekörper in eine Richtung parallel zur Ausrichtung der Gleitoberfläche beweglich angeordnet. Dadurch wird erreicht, dass der Gleitdruckkörper in gewünschter Weise über die Stoßkante der Kunststoffprofile bewegt wird. Besitzt nun ein solcher Gleitdruckkörper mehrere, winklig zueinander angeordnete Gleitoberflächen (die für eine Bearbeitung unterschiedlicher Bereiche der Stoßkante vorgesehen sind), so ist natürlich auch die Beweglichkeit des Haltekörpers hierauf angepasst. Er ist dann vorzugsweise in einer Ebene parallel zur Gehrungsfläche bewegbar ausgeführt.

Vorteilhafter Weise umfasst die Erfindung mehrere unterschiedliche Varianten von Druckkörpern.

Die verschiedenen Varianten von Druckkörpern haben, wie vorbeschrieben, unterschiedliche Vorzüge und Eigenschaften. Geschickter Weise ist der Haltekörper so universell ausgestaltet, dass er sowohl für die Aufnahme eines als Druckrollenkörpers ausgebildeten Druckkörpers, wie auch eines als Gleitdruckkörpers ausgebildeten Druckkörpers dient. An dem Haltekörper sind entsprechend universell ausgestaltete Aufnahmen vorgesehen, die auch einen schnellen Austausch der unterschiedlichen Druckkörpervarianten erlaubt, um so zum Beispiel während der Produktion kurzfristig auf einen anderen Profiltyp umrüsten zu können.

Des Weiteren umfasst die Offenbarung auch die vorteilhafte Verwendung eines Druckkörpers, der als drehbar gelagerter Rolldruckkörper ausgebildet ist und entlang zumindest einer Raumachse geführt und beweglich gelagert ist, zum Eindrücken einer Schweißwulst, Erhebung, eines Überstandes oder Höhenunterschiedes an der Stoßkante, die sich beim Verbinden zweier Kunststoffprofile, insbesondere bei der Herstellung eines Tür- oder Fensterrahmens oder - Teilfensterrahmens ergibt, in den Stoßbereich.

Beachtenswert ist dabei insbesondere, dass das sehr gute Bearbeitungsergebnis hierbei ohne eine weitere, zusätzliche vorhergehende spanabhebende Bearbeitung an der Begrenzungskante des Profiles (also zum Beispiel an der Profiloberseite) erreicht wird. Der erfindungsgemäße Vorschlag kommt vollständig ohne die Anordnung einer Phase oder Nut an der Profilaußenseite aus. Da kein zusätzlicher Bearbeitungsschritt notwendig ist, ist der Vorschlag für den Anwender auch effektiv, da Bearbeitungszeit gespart und gleichzeitig ein sehr gutes Bearbeitungsergebnis erreicht wird.

Als Stoßbereich sei hierbei der Bereich der beiden miteinander verbundenen Kunststoffprofile verstanden, die sich an der Stoßkante anschließen, bzw. durch ihr Zusammenwirken die Stoßkante definieren. Der Stoßbereich ist dabei insbesondere auch das Material der Kunststoffprofile, in welche das über- oder vorstehende Profilmaterial (der Profilüberstand) eingewalzt oder eingerollt wird.

Insbesondere treten auch bei der zur Erfindung gehörenden Verwendung all die Vorteile, die im Zusammenhang mit dem Verfahren bzw. der Vorrichtung gemäß der Erfindung beschrieben sind, in gleicher Weise zutage.

Zusammengefasst ergeben die verschiedenen vorbeschriebenen Ausführungsvarianten des Vorschlages einen reichen Schatz von Vorteilen.

Das Eindrücken bewirkt, unabhängig von dem Verbindungsverfahren (Verschweißen oder Verkleben) der Kunststoffprofile eine optimale Ausbildung der Stoßkante, insbesondere auf der Profiloberfläche, die dem Betrachter zugewandt ist.

Der Vorschlag umfasst aber auch Lösungen, wie die Eckbereiche (innen wie außen) des Fensterrahmens in gleicher Qualität bearbeitet werden können.

Überraschenderweise ist eine solche Bearbeitung auch mit nicht erwärmten Profil erfolgreich durchführbar.

Der gemäß der Erfindung vorgeschlagene Ablauf kann auch als Finishen durch Rollen (zum Beispiel mit einem abrollenden Rolldruckkörper) oder Finishen durch Abdrücken (zum Beispiel mit einem gezogenen Druckkörper) bezeichnet werden.

In diesem Zusammenhang wird insbesondere darauf hingewiesen, dass alle in Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

Gleiches gilt auch mit Blick auf die offenbarungsgemäße Verwendung, d.h., alle im Bezug auf das erfindungsgemäße Verfahren oder Vorrichtung beschriebenen Merkmale oder Anwendungsfälle sind in gleicher Weise auf die offenbarungsgemäße Verwendung zu übertragen, gehören zur Offenbarung dieser Anmeldung.

In der Zeichnung ist die Erfindung insbesondere in mehreren Ausführungsbeispielen schematisch dargestellt. Es zeigen:
- Fig. 1a, 2a, 3a: je in einer Seitenansicht verschiedene Stellungen des Haltekörpers relativ zu den Kunststoffprofilen gemäß der Erfindung,
- Fig. 1b, 2b, 3b: je in einer dreidimensionalen Ansicht von oben verschiedene Stellungen des Haltekörpers relativ zu den Kunststoffprofilen gemäß der Erfindung,
- Fig. 1c, 2c, 3c: je in einer dreidimensionalen Ansicht verschiedene Stellungen des Haltekörpers relativ zu den Kunststoffprofilen gemäß der Erfindung, wobei die Figurensequenz 1a, 1b und 1c sowie die Figurensequenz 2a, 2b, 2c und die Figurensequenz 3a, 3b und 3c jeweils zu einer gemeinsamen Stellung des Haltekörpers relativ zu den Kunststoffprofilen gehören,
- Fig. 4a bis 4h: je in einer Seitenansicht verschiedene Varianten des Druckkörpers gemäß der Erfindung,
- Fig. 5: in einer dreidimensionalen Ansicht ein weiteres Ausführungsbeispiel der erfindungsgemäßen Vorrichtung, und
- Fig. 6a, 6b: je in einer dreidimensionalen Ansicht verschiedene Stellungen des Haltekörpers eines weiteren Ausführungsbeispieles relativ zu den Kunststoffprofilen gemäß der Erfindung,

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

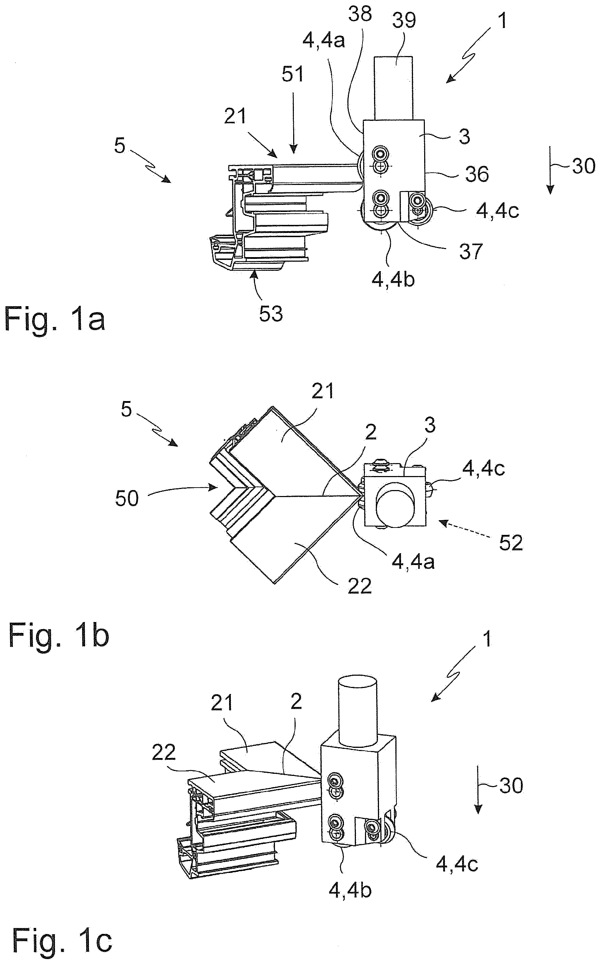

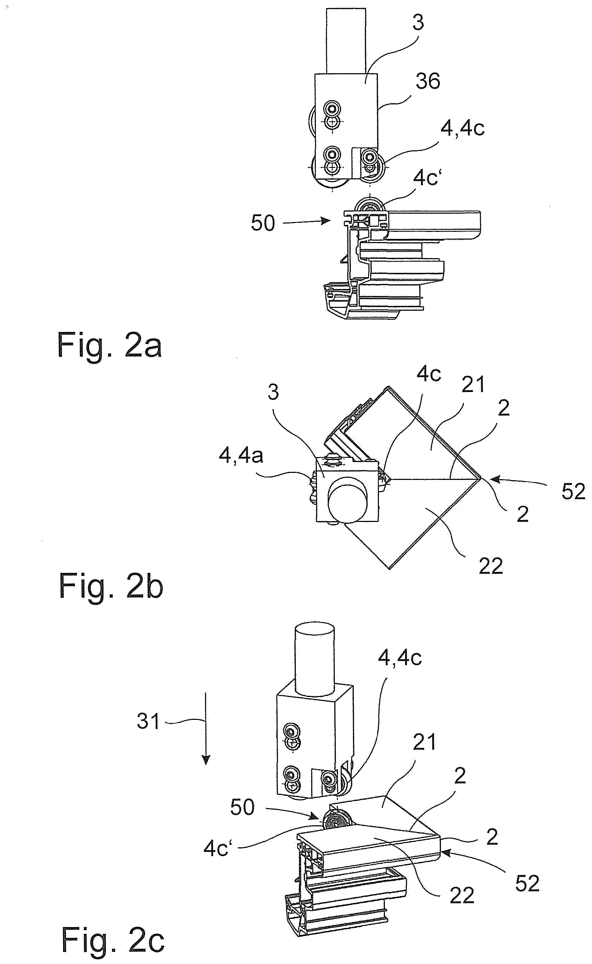

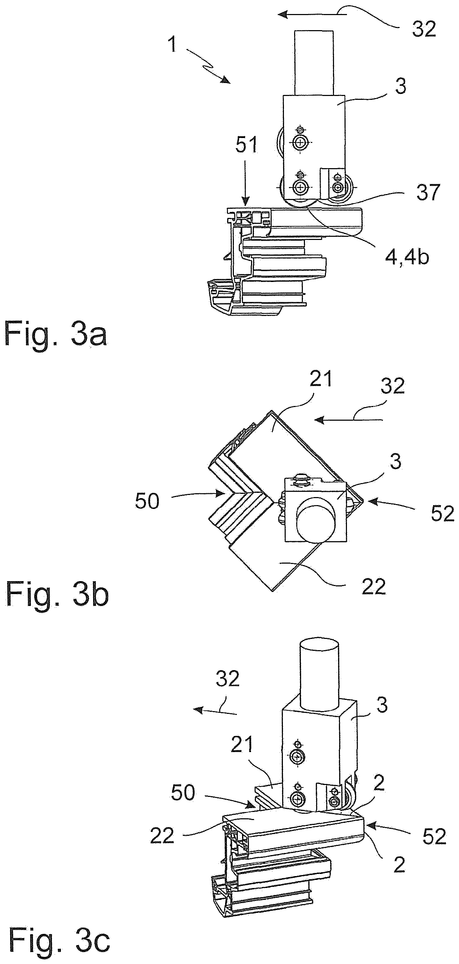

In Figur 1b (dies gilt analog auch für die Figuren 2b und 3b) ist nicht exakt die Perspektive einer Draufsicht gezeigt, vielmehr ist es eine dreidimensionale Ansicht, bei welchen der Betrachtungswinkel ca. 10-20° gegen die Vertikale nach vorne geneigt ist. In Figur 1b ist gut zu erkennen, wie die erfindungsgemäße Vorrichtung 1 an der Außenecke 52 des hier gezeigten Teilrahmens 5 positioniert ist. Dabei zeigt Figur 1b einen Teilrahmen 5 (dies kann auch der Ausschnitt eines Gesamtrahmens sein), das durch die zwei rechtwinklig miteinander verbundenen Kunststoffprofile 21 und 22 gebildet ist. Dabei wurden die beiden Kunststoffprofile 21 und 22 je unter einem Gehrungswinkel von 45° vorbereitet.

Die Stoßkante 2 ist dabei dadurch definiert, wo die beiden Kunststoffprofile 21,22 aneinander stoßen, dies ist in diesem Fall auch gleichzeitig die Gehrung. Dabei erstreckt sich die Stoßkante 2 nicht nur in der hier gezeigten Profiloberseite 51 (siehe zum Beispiel Figur 1a), sondern die Stoßkante 2 bildet sich an der gesamten Gehrungsfläche an der Außenkontur der hier aneinanderstoßenden Kunststoffprofile 21,22, also an der Innenecke 50, der Profiloberseite 51, der Außenecke 52 und der Profilunterseite 53, aus.

Die Vorrichtung 1, wie sie hier gezeigt ist, besteht (unter anderem) aus einen Haltekörper 3. Hier nicht gezeigt, aber zur Vorrichtung 1 gehörend, ist ein Antrieb und eine Führung für den Haltekörper 3, durch welchen der Haltekörper 3 entlang der Stoßkante 2 zumindest ein-, bevorzugt zwei- oder dreidimensional bewegbar und geführt ist.

Der Haltekörper 3 trägt mehrere Druckkörper 4,4a, 4b, 4c. Der hier dargestellte Haltekörper 3 ist quaderförmig gebildet. An seinem oberen Ende greift eine Führungsstange 39 an, die mit dem Antrieb und/oder der Führung zusammenwirkt.

In der Figurensequenz 1a, 1b und 1c ist an der linken Seitenwand 38 des Haltekörpers 3 der Druckkörper 4,4a vorgesehen, der an der Außenecke 52 in Einsatz ist. Dabei ist der Druckkörper 4a ungefähr in der Mitte der Seitenwand 38 angeordnet und steht etwas gegenüber dieser (und nur gegenüber dieser) Seitenwand 38 vor.

Des Weiteren trägt der Haltekörper 3 (siehe hierzu insbesondere Figur 1a) an seiner Unterseite 37 einen weiteren Druckkörper 4,4b. Genau genommen ist der Druckkörper 4b sowohl im Bereich der Unterseite 37, wie auch gegebenenfalls an der linken Seitenwand 38 einsetzbar, da er über die jeweiligen Seiten bzw. Seitenwände ein wenig vorsteht. Der Druckkörper 4b ist für die Bearbeitung der an der Profiloberseite 51 vorhandenen Stoßkante 2 vorgesehen.

Die Unterseite 37 verbindet dabei die linke Seitenwand 38 mit der rechten Seitenwand 36. Es ist des Weiteren ein Druckkörper 4,4c vorgesehen, der etwas über die rechte Seitenwand 36 vorsteht. Auch diese Druckkörper 4c ist in der Ecke angeordnet derart, dass Teile dieses Druckkörpers 4c sowohl gegenüber der rechten Seitenwand 36, wie auch gegenüber der Unterseite 37 vorstehen.

Die Druckkörper 4a, 4b und 4c sind vorzugsweise als drehbar gelagerte Rolldruckkörper ausgebildet. Die genaue Ausgestaltung wird in der Figurensequenz 4a bis 4h beschrieben.

Wie eingangs bereits beschrieben ist in der Figurensequenz 1a, 1b, 1c die an der Außenecke 52 vorgesehene Stoßkante 2 zu bearbeiten. Hierzu wird der Haltekörper 3 derart an dem Teilrahmen 5 positioniert, dass der Druckkörper 4a an der an der Außenecke 52 vorhandenen Stoßkante 2 positioniert ist. Dann erfolgt eine Bewegung des Haltekörpers 3 in vertikaler Richtung nach unten, hier dargestellt durch den Pfeil 30. Genau genommen wird der Haltekörper 3 beginnend von der Ebene der Profiloberseite 51 auf die Ebene der Profilunterseite 53 bewegt. In dem hier gezeigten Ausführungsbeispiel ist der Teilrahmen 5 liegend angeordnet, wobei seine Profiloberseite 51 oben und die Profilunterseite 53 unten orientiert ist, wodurch sich die vertikal nach unten gerichtete Bewegung 30 des Haltekörpers 3 ergibt.

Dabei ist die Anordnung grundsätzlich so gewählt, dass bei der Bewegung 30 des Haltekörpers 3 eine ausreichend große Kraft von den Druckkörper 4,4 a auf die Stoßkante 2 (hier rechtwinklig zur Bewegungsrichtung 30, parallel zur Rahmenebene des Teilrahmen 5, hier in der Figur nach links) einwirkt, um dem dort vorhandenen Profilüberstand zu egalisieren oder einzudrücken. Natürlich ist dabei der Teilrahmen 5 durch eine nicht gezeigte Spannvorrichtung festgelegt und aufgespannt. Die genaue Ausgestaltung dieser formgebenden Bearbeitung hängt von der Ausgestaltung des Druckkörpers 4 ab.

Vorzugsweise ist dabei für jedes Kunststoffprofil eine eigene Spannvorrichtung vorgesehen, die dafür ausgestattet ist, das jeweilige Kunststoffprofil aufzunehmen und für den Verbindungsvorgang zuverlässig zu halten. Dabei ist die Spannvorrichtung vorzugsweise in Längsrichtung des Kunststoffprofiles beweglich, wofür einerseits eine Führung für die Spannelemente der Spannvorrichtung und andererseits ein entsprechender Antrieb vorgesehen ist.

In den verschiedenen Figurensequenzen nicht dargestellt ist die optional nach einem Vorschlag vorgesehene Heizung, die dafür vorgesehen ist, das Profilmaterial der Kunststoffprofile 21, 22 beidseits der Stoßkante 2 zu erwärmen und so zu plastifizieren, um das Eindrücken zu erleichtern.

In der Figurensequenz 2a, 2b und 2c ist die Bearbeitung der Stoßkante 2 in der Innenecke 50 gezeigt. Hierzu ist der Haltekörper 3 über der Innenecke 50 positioniert und wird dort in einer vertikalen Bewegung 31 (analog der Bewegung 30) nach unten bewegt derart, dass der an der rechten Seitenwand 36 angeordnete Druckkörper 4c auf die Innenecke 50 einwirkt. Die Innenecke 50 liegt dabei an dem Profil der Außenecke 52 gegenüber.
In Figur 2a und Figur 2c ist mit 4c'die Stellung des in die Innenecke 50 eingetauchten Druckkörper 4c' beispielhaft gezeigt, um zu verdeutlichen, wie der Druckkörper 4c' an der Innenecke 50 anliegt.

Dabei ist auch hier die Anordnung so gewählt, dass bei der Bewegung 31 des Haltekörpers 3 eine ausreichend große Kraft von den Druckkörper 4c' auf die Stoßkante 2 (hier rechtwinklig zur Bewegungsrichtung 31, bzw. parallel zur Rahmenebene des Teilrahmen 5, hier in der Figur nach rechts) einwirkt, um den an der Innenecke 50 vorhandenen Profilüberstand zu egalisieren oder einzudrücken. Natürlich ist dabei der Teilrahmen 5 durch eine nicht gezeigte Spannvorrichtung festgelegt und aufgespannt. Die genaue Ausgestaltung dieser formgebenden Bearbeitung hängt auch hier von der Ausgestaltung des Druckkörpers 4c' ab.

In der Figurensequenz 3a, 3b und 3c ist die Bearbeitung der Stoßkante 2 auf der Profiloberseite 51 gezeigt. Hierzu wird der Haltekörper 3 beginnend von der Außenecke 52 in einer horizontalen Bewegung 32 zur Innenecke 50 entlang der Stoßkante 2, hier der Gehrung bewegt. Dabei drückt der auf der Unterseite 37 vorstehende Druckkörper 4,4b mit ausreichender Kraft auf die Profiloberseite 51. Diese Kraft ist hierbei wiederum rechtwinklig zur Stoßkante 2 auf der Profiloberseite 51 orientiert und ist hier vertikal nach unten gerichtet.

In der Figurensequenz 4a bis 4h sind verschiedene Ausführungsvarianten des als Rolldruckkörpers 40 ausgebildeten Druckkörpers 4 gezeigt. Die hier gezeigten Varianten sind jeweils im Ansicht dargestellt und sind allesamt um eine Drehachse 47 drehbar gelagert. Es ist klar, dass der Haltekörper 3 in geeigneter Weise die Drehachse 47 aufnimmt und lagert.

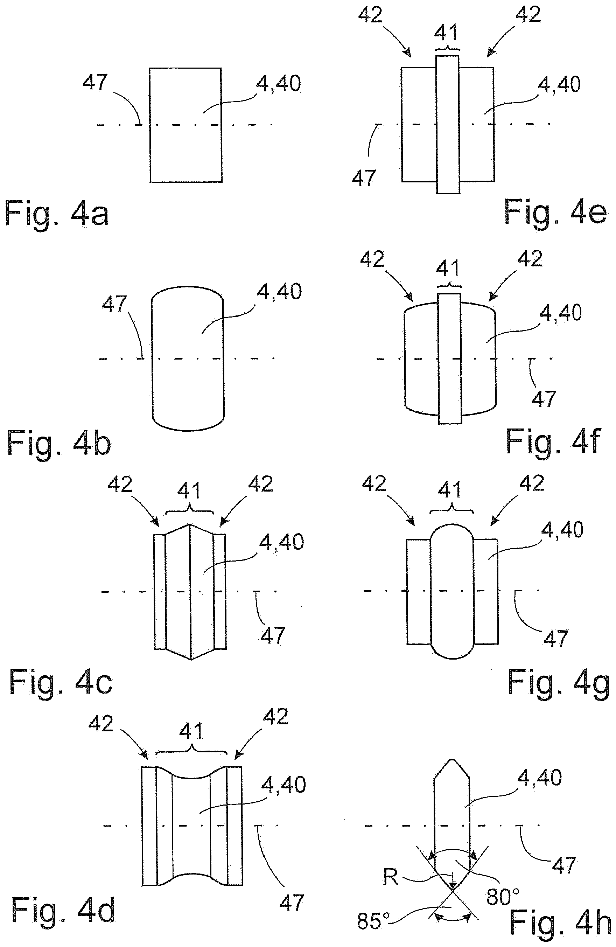

In dem Ausführungsbeispiel nach Figur 4a ist der Rolldruckkörper 40 als einfacher Zylinder ausgeführt.

In dem Ausführungsbeispiel nach Figur 4b ist der Rolldruckkörper 40 mit einer balligen, nach außen gewölbten Mantelfläche ausgestattet, der bei einem Einsatz an der Stoßkante 2 zu einer leichten Hohlkehle führt.

In dem Ausführungsbeispiel nach Figur 4c ist der Rolldruckkörper 40 aus drei unterschiedlichen geometrischen Körpern gebildet. Seitlich sind je abschließende Flankenkörper 42 vorgesehen. Diese abschließenden Flankenkörper 42 sind als Scheiben oder Zylinder realisiert. Sie stützen den Rolldruckkörper 40 auf der Profiloberfläche ab und nivellieren diesen. Zwischen den beiden Flankenkörper 42 ist ein mittlerer Bereich 41 vorgesehen, der aus zwei gegeneinandergestellte Kegelstümpfe gebildet ist und im Einsatz eine V-förmige Nut an der Stoßkante einarbeitet.

Auch in dem Ausführungsbeispiel nach Figur 4d ist der Rolldruckkörper 40 aus drei unterschiedlichen geometrischen Körpern gebildet. Zwischen zwei scheibenförmigen Flankenkörper 42 ist ein Mittelkörper 41 vorgesehen, der eine konkave, nach innen gewölbte Mantelfläche aufweist und im Einsatz eine auf dem Profil erhabene Struktur ergibt.

In dem Ausführungsbeispiel nach Figur 4e ist der Rolldruckkörper 40 aus drei unterschiedlichen geometrischen Körpern gebildet. Zwischen zwei scheibenförmigen Flankenkörper 42 ist ein zylindrischer Mittelkörper 41 vorgesehen, sein Durchmesser ist größer wie der Durchmesser des zeitlichen Flankenkörper 42.Im Einsatz wird hiermit eine U-förmige Nut an der Stoßkante einarbeitet.

Das Ausführungsbeispiel nach Figur 4f ist eine Variante zu dem Vorschlag nach Figur 4e. Anstelle von zylindrischen Flankenkörper 42 werden hier kegelstumpfartige Flankenkörper 42 vorgesehen, deren Durchmesser sich jeweils nach außen verringern.

Das Ausführungsbeispiel nach Figur 4g baut auf dem Vorschlag von Figur 4b auf. Seitlich neben dem balligen Mittelteil 41 sind zylindrische Flankenkörper 42 vorgesehen.

Das Ausführungsbeispiel nach Figur 4h sieht auf den ersten Blick aus wie das Mittelteil 41 nach Figur 4c, nur mit steileren Winkeln. Allerdings ist hier die Ausgestaltung optimiert, da die jeweilig seitlichen, außen liegende Bereiche dieses Rolldruckkörpers 40 miteinander einen Winkel von 80° einschließen, wohingegen die mittleren Bereiche, im Bereich der Spitze R, einen Winkel von 85° einschließen. Ein solcher Rolldruckkörper 40 wird zum Beispiel bevorzugt bei der Bearbeitung der Stoßkante an einer Innenecke eingesetzt, wobei hier je nach Ausgestaltung des Profils auch Bearbeitungswinkel an der Spitze R auftreten, die kleiner als 90° sind. In einer bevorzugten Variante des Vorschlages ist dabei vorgesehen, dass der Druckkörper als Rolldruckkörper ausgebildet ist, der Rolldruckkörper selber aus 2 gegeneinander gestellte Kegelstrümpfe gebildet ist und die sich dabei in Ansicht bildende Spitze R bevorzugt einen Winkel kleiner 90°, bevorzugt kleiner 89°, 88°, 87° oder 85° einschließt.

Der Vorzug des drehbar gelagerten Rolldruckkörpers 40 ist, dass diese die Kraft punktuell in das Profil einbringt, also auf der Profiloberfläche keine Kraftkomponente in transversale Richtung (parallel zur Rahmenebene oder Richtung der Stoßkante 2) ausüben. Allerdings geht dies mit dem Nachteil einher, dass der Einsatz eines Rolldruckkörper 40 bevorzugt an großflächigen, nicht durch Absätze beschränkten Stoßkanten 2 erfolgen sollte, da der notwendige Radius der Rolldruckkörper 40 an solchen Absätzen anstößt und so die Wirksamkeit und Einsetzbarkeit begrenzt.

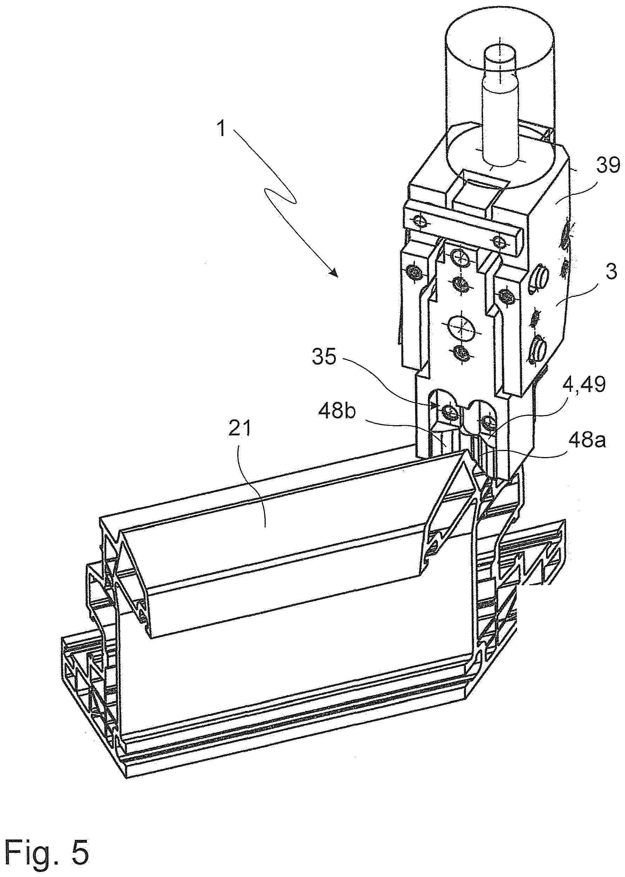

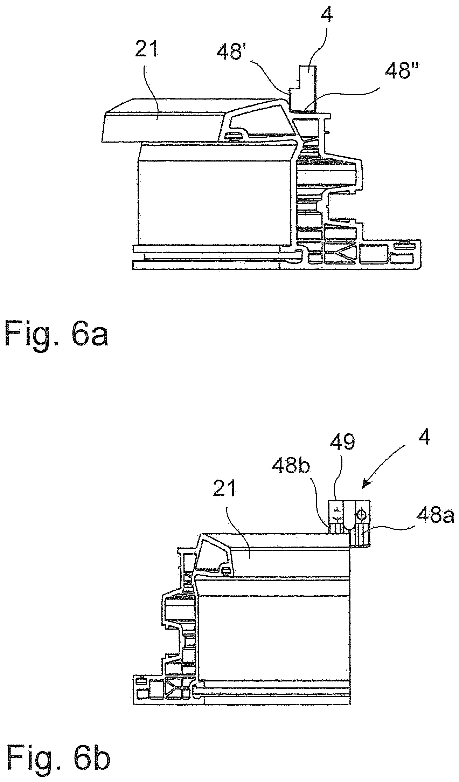

Daher wird auch ein Gleitdruckkörper 49 vorgeschlagen der punktgenau an dem Profil bzw. der Stoßkante 2 angesetzt und so auch an Absätzen des Profils positioniert wird, aber dann in einer Gleitbewegung über das Profil bewegt wird. Die Ausgestaltung eines solchen Gleitdruckkörpers 49 als Druckkörper 4 ist in Figur 5 bzw. Figur 6a, 6b als weiteres Ausführungsbeispiel gezeigt.

In Figur 5 ist daher ein weiteres Ausführungsbeispiel der Vorrichtung 1 gezeigt. An dem Haltekörper 3, der hier detaillierter ausgeführt ist, und zum Beispiel mehrteilig gebildet ist, ist im unteren Bereich eine Aufnahme 35 vorgesehen, die den Druckkörper 4 aufnimmt. In dem hier gezeigten Ausführungsbeispiel ist der Druckkörper 4 als Gleitdruckkörpers 49 realisiert, also nicht drehbar gelagert. Der Druckkörper 4 besitzt hingegen mehrere Gleitoberflächen 48a und 48b. Diese Gleitoberflächen 48a und 48b sind winkelig, zum Beispiel in einem rechten oder stumpfen Winkel zueinander, angeordnet und bearbeiten so die Außenecke 52 des Rahmens, von dem in Figur 5 nur das Kunststoffprofil 21 dargestellt ist, das zweite Kunststoffprofil ist zur Erhöhung der Übersichtlichkeit weggelassen.

Geschickterweise ist der Winkel, den die beiden Gleitoberflächen 48a und 48b miteinander einschließen, dem resultierenden Winkel der aneinanderstoßenden Profilbereiche an der Stoßkante angepasst.

Es ist beschrieben, dass hier eine Außenecke bearbeitet wird, obwohl die Stellung des Haltekörpers 3 nicht ganz außen ist. Dies ist nicht widersprüchlich, da mit dem hier gezeigten Gleitdruckkörper 49 der gegenüber der Profiloberseite ansteigende (oder abfallende, je nach Blickrichtung) Bereich, ähnlich wie in der Außenecke, bearbeitet wird. Natürlich ist eine entsprechende winkelige Ausgestaltung auch zur Bearbeitung der außen liegenden Außenecke vorgesehen.

Ähnlich wie Figur 5 zeigt auch Figur 6b den Einsatz zweier winkelig zueinander orientierter Gleitoberflächen 48a und 48b, die in der Regel gleichzeitig zur Bearbeitung der Stoßkante 2 eingesetzt werden. Es ist aber auch möglich, dass der Gleitdruckkörper 49 zwei winkelig zueinander angeordnete Gleitoberflächen 48 ' und 48" besitzt, die in unterschiedlichen Bewegungsrichtungen unterschiedliche Bereiche der Stoßkante bearbeiten. So ist zum Beispiel die Gleitoberfläche 48" für die Bearbeitung des horizontalen Profilbereiches ausgebildet, wohingegen die Gleitoberfläche 48' für den ansteigenden Profilbereich vorgesehen ist.

Typischerweise ist also die Bewegungsrichtung für den Einsatz der unterschiedlichen Gleitoberflächen unterschiedlich.

Der Vollständigkeit halber sei erwähnt, dass natürlich die Erfindung auch die integrierte, einstückige Ausgestaltung eines Haltekörpers 3 mit einem Druckkörper 4 umfasst.

## Patentansprüche

1. Verfahren für das Verbinden zweier Kunststoffprofile (21, 22), insbesondere zur Herstel-
lung eines Flügel- oder Stockrahmens, mit der Abfolge folgender Schritte:
▪ Zusammenführen der beiden Kunststoffprofile (21, 22), derart, dass sich spätestens mit dem Kontakt der zu verbindenden Flächen der Kunststoffprofile (21, 22) eine mechanisch stabile Verbindung und zwischen den Kunststoffprofilen (21, 22) eine Stoßkante (2) ergibt,
▪ Bewegen eines Druckkörpers (4, 4a, 4b, 4c) entlang der Längserstreckung der Stoßkante (2), wobei der Druckkörper (4, 4a, 4b, 4c) eine Kraft, die spitz- bis rechtwinklig zur Längserstreckung der Stoßkante (2) gerichtet ist, auf die Stoßkante (2) ausübt,
**dadurch gekennzeichnet, dass** der Druckkörper als drehbar gelagerter Rolldruckkörper (40) ausgebildet ist, und
▪ eine an der Stoßkante (2) über die Außenkontur der verbundenen Kunststoffprofile (21, 22) hervorstehenden Schweißwulst durch den Druckkörper (4, 4a, 4b, 4c) in den Stoßbereich der beiden Kunststoffprofile (21, 22) eingedrückt wird.

2. Verfahren nach Anspruch 1, **dadurch gekennzeichnet, dass** das Verbinden durch ein Verschweißen der jeweiligen Flächen, zum Beispiel den Gehrungsflächen, erfolgt, wozu diese zumindest teilweise erwärmt und dann aufeinander zu bewegt werden.

3. Verfahren nach einem der vorhergehenden Ansprüche, **dadurch gekennzeichnet, dass** bevor der Druckkörper (4, 4a, 4b, 4c) entlang der Stoßkante (2) bewegt wird, eine Heizung zumindest den Bereich der Stoßkante (2) erwärmt.

4. Verfahren nach einem der vorhergehenden Ansprüche, **dadurch gekennzeichnet, dass** ein sich im Bereich der Stoßkante (2) nach dem Verbinden ergebende Erhebung, Überstand oder Höhenunterschied durch den Druckkörper (4, 4a, 4b, 4c) in den Stoßbereich der beiden Kunststoffprofile (21, 22) eingedrückt wird.

5. Verfahren nach einem der vorhergehenden Ansprüche, **dadurch gekennzeichnet, dass** die Bewegung des Druckkörpers (4, 4a, 4b, 4c) gleich im Anschluss auf das Verschweißen erfolgt, wenn die Stoßkante (2) noch vom Verschweißen erwärmt ist.

## Claims

1. Method for joining two plastic profiles (21, 22), in particular for producing a sash frame or block frame, comprising the following sequence of steps:
- bringing together the two plastic profiles (21, 22) such that, at the latest when the surfaces of the plastic profiles (21, 22) to be connected come into contact, a mechanically stable join is formed and an abutting edge (2) is formed between the plastic profiles (21, 22),
- moving a pressure body (4, 4a, 4b, 4c) along the longitudinal extension of the abutting edge (2), wherein the pressure body (4, 4a, 4b, 4c) exerts a force on the abutting edge (2) which force is directed from an acute angle up to a right angle relative to the longitudinal extension of the abutting edge (2),
**characterised in that**
the pressure body is designed as a rotatably mounted rolling pressure body (40), and
a welding bead protruding on the abutting edge (2) beyond the outer contour of the joined plastic profiles (21, 22) is pushed by the pressure body (4, 4a, 4b, 4c) into the abutting region of the two plastic profiles (21, 22).

2. Method according to claim 1, **characterised in that** the join is formed by welding the respective surfaces, for example the mitre surfaces, for which reason the latter are at least partially heated and then moved towards one another.

3. Method according to any of the preceding claims, **characterised in that** before the pressure body (4, 4a, 4b, 4c) is moved along the abutting edge (2), a heater heats at least the region of the abutting edge (2).

4. Method according to any of the preceding claims, **characterised in that** an elevation, protrusion or height difference created in the region of the abutting edge (2) after joining is pressed into the abutting region of the two plastic profiles (21, 22) by the pressure body (4, 4a, 4b, 4c).

5. Method according to any of the preceding claims, **characterised in that** the movement of the pressure body (4, 4a, 4b, 4c) takes place immediately after the welding, when the abutting edge (2) is still hot from the welding.

## Revendications

1. Procédé pour la connexion de deux profilés en plastique (21, 22), en particulier pour la fabrication d'un cadre de battant ou de dormant, avec la succession d'étapes suivantes consistant à :
- réunir les deux profilés en plastique (21, 22) de sorte qu'il en résulte, au plus tard avec le contact des surfaces à connecter des profilés en plastique (21, 22), une connexion mécaniquement stable et, entre les profilés en plastique (21, 22), un bord de butée (2),
- déplacer un corps de pression (4, 4a, 4b, 4c) le long de l'extension longitudinale du bord de butée (2), dans lequel le corps de pression (4, 4a, 4b, 4c) exerce sur le bord de butée (2) une force qui est dirigée de pointe à perpendiculaire à l'extension longitudinale du bord de butée (2),
**caractérisé en ce que** le corps de pression est réalisé en tant que corps de pression roulant (40) monté de manière rotative, et
- un bourrelet de soudure en saillie sur le bord de butée (2) par rapport au contour extérieur des profilés en plastique (21, 22) connectés est enfoncé par le corps de pression (4, 4a, 4b, 4c) dans la zone de butée des deux profilés en plastique (21, 22).

2. Procédé selon la revendication 1, **caractérisé en ce que** la connexion s'effectue par un soudage des surfaces respectives, par exemple les surfaces en biais, pour lequel celles-ci sont au moins partiellement chauffées puis déplacées l'une vers l'autre.

3. Procédé selon l'une quelconque des revendications précédentes, **caractérisé en ce que**, avant que le corps de pression (4, 4a, 4b, 4c) soit déplacé le long du bord de butée (2), un chauffage chauffe au moins la zone du bord de butée (2).

4. Procédé selon l'une quelconque des revendications précédentes, **caractérisé en ce qu'**un relief, une saillie ou une différence de hauteur se produisant dans la zone du bord de butée (2) après la connexion est enfoncé par le corps de pression (4, 4a, 4b, 4c) dans la zone de butée des deux profilés en plastique (21, 22).

5. Procédé selon l'une quelconque des revendications précédentes, **caractérisé en ce que** le déplacement du corps de pression (4, 4a, 4b, 4c) s'effectue immédiatement après le soudage, lorsque le bord de butée (2) est encore chauffé par le soudage.
